# EUROPEAN PATENT APPLICATION

(11) **EP 1 545 139 A1**
(43) Date of publication of application: **22.06.2005**
(21) Application number: 03104823.4
(22) Date of filing: 19.12.2003
(51) Int. Cl.: H04Q 7/00

(54) **Method and system to provide a continous wireless connection using a MS as relay**

(71) Applicant: Telefonaktiebolaget LM Ericsson (publ), 164 83 Stockholm (SE)
(72) Inventor: Nyström, Johan, SE-112 33, Stockholm (SE); Frenger, Pal, SE-162 67, Vällingby (SE); Dahlman, Erik, SE-168 68, Bromma (SE); Parkvall, Stefan, SE-11322, Stockholm (SE)
(74) Representative: Stenborg, Anders Vilhelm

(57) **Abstract**

A system and a method for wireless linking in a cellular communication system are disclosed such that a mobile station is maintained in simultaneous communication with at least a first node and a second node for access to the cellular communication system. Information going to and from the first node is not identical to the information going to and from the second node. In one embodiment the second node, or secondary access point is a relay node forwarding received information to and from the first node, or primary access point. In another embodiment the second node is another mobile station performing a direct mobile-to-mobile communication (MS-to-MS). In still an embodiment a first wireless link to the first node is for control information only. In still a further embodiment a second wireless link to the second node is only for communication of information from the mobile station or only for communication of information to the mobile station.

## Description

### TECHNICAL FIELD

The present invention relates to a method for setting up and maintaining wireless communication between nodes.

### BACKGROUND

### Technical Background/Existing Technology

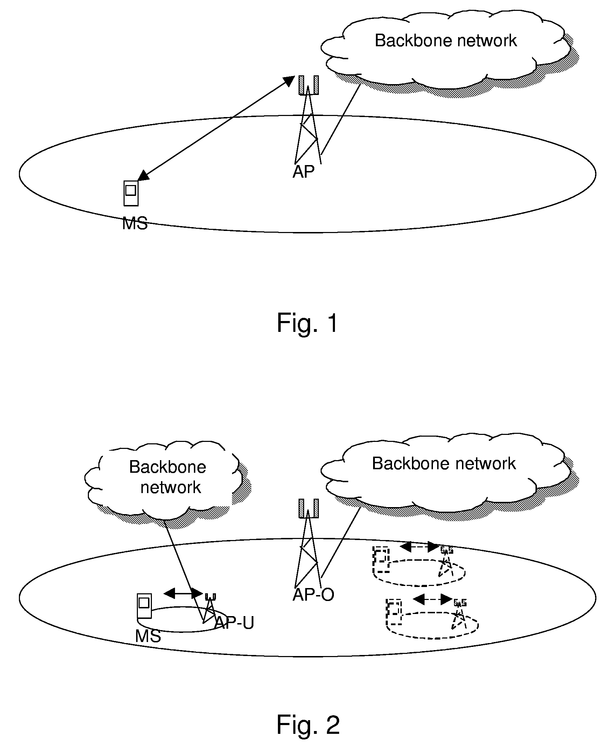

Figure 1 illustrates a basic communication scenario in a cellular system, with a Mobile Station (MS), sometimes referred to a Mobile Terminal or a User Equipment, communicating with a network node, here referred to as an Access Point (AP), but also sometimes referred to as a Network Access Point, or a Base Station, or a Node B, by means of a direct two-way radio link. The traffic sent by the mobile station and received by the access point is typically routed into a backbone network. Similarly the access point typically receives traffic from the backbone network for transmission to the mobile station.

Some key characteristics of future radio access are:
Support for very large traffic, measured in Mbps (Megabits per second) per area. A key issue is how to enable this with a limited amount of spectrum. This is true for transmission in the downlink or forward link direction as well as the uplink or reverse link (MS-to-AP) direction.
Support for very high data rates. A key issue is how to enable this without the need for very high transmission power. This is primarily an issue for communication in the uplink (MS-to-AP) direction, due to limitations in the mobile station transmission power. However, in some cases it could also be an issue for communication in the downlink direction.

An obvious means to handle both key issues mentioned above is to reduce the cell size, i.e. reduce the coverage area of each access point. When doing so one is often deploying "two cell layers" with cells of different size, also known as a Hierarchical Cell Structure (HCS), see Figure 2. The two cell layers can be referred to as the *over-laid layer* and the *under-laid layer* with corresponding access points AP-O and AP-U, respectively. Note that the over-laid layer and the under-laid layer may be connected to the same or different backbone networks. Also note that, as explicitly shown in Figure 2, the area covered by an access point of the over-laid layer will typically cover the coverage area of multiple access points of the under-laid layer.

The radio-access technologies used in the under-laid layer and the over-laid layer could, but does not need to, be the same. The over-laid layer could e.g. use cellular radio-access technology, such as third generation 3G Wideband Code Division Multiple Access, WCDMA, or a future fourth generation 4G cellular technology based on e.g. Orthogonal Frequency Division Multiplexing (OFDM) or Orthogonal Frequency and Code Division Multiplexing (OFCDM). The under-laid layer could e.g. use WLAN technology, such as IEEE 802.11. However, the under-laid layer could also use the same radio-access technology as the over-laid layer. Both the overlaid and the under-laid layer could e.g. be based on 3G WCDMA or a future 4G radio-access technology. Many other combinations of radio-access technologies for the over-laid and under-laid layers are also possible.

The over-laid and under-laid layers could operate in the same or neighboring frequency bands or in completely different frequency bands. The frequency band, or spectrum, used for the under-laid and/or over-laid layer could be licensed or unlicensed. In case of licensed spectrum, the same operator will typically operate both the under-laid and over-laid layers. However, the under-laid and over-laid layers could also be operated by different operators. From a mobile-station complexity point-of-view, it is beneficial if the over-laid and under-laid layers use the same air-interface and operate in the same or neighbor frequency bands.

A related means to deal with the two basic issues mentioned above (support for high capacity and very high data rates) is to utilize so-called relaying.

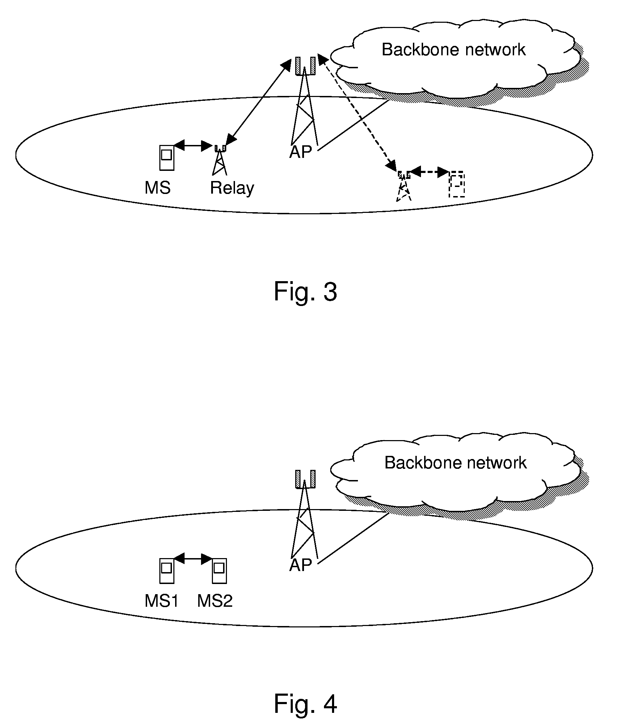

This implies that mobile stations communicate with the access point via one (or multiple) intermediate node(s), also referred to as being Relays, see Figure 3. In the uplink, a relay forwards data received from the mobile station to the access point. Similarly, in the downlink a relay forwards data received from the access point to the mobile station. In the scenario outlined in Figure 3, the mobile station can either communicate with the access point directly or, as explicitly shown on Figure 3, indirectly via a relay. To relate with the solution of Figure 2 above, one can say that in the solution of Figure 3 there are two communication layers, an over-laid layer where a mobile station communicates directly with the access point and a Relay layer (corresponding to the under-laid layer of figure 2) where a mobile station communicates with the access point via a relay. Similar to the solution of Figure 2, the air-interface technology used when a mobile station communicates directly with an access point and the air-interface technology used when a mobile station communicates with a relay could be the same or different. Similarly, the spectrum used when a mobile station communicates directly with the access point could be the same or different compared to the spectrum used when a mobile station communicates with a relay. Note that, as explicitly shown in Figure 3, the area covered by an access point of the over-laid layer will typically include multiple relays.

A third transmission scenario, with some similarities to that of Figure 2, may occur if two mobile stations very close to each other are to communicate with each other. Instead of communicating via the mobile network, i.e. via an access point, a radio link may then be set up directly between the two mobile stations, see Figure 4. This can be referred to as direct MS-to-MS communication. Note that in the general case more than two mobile stations may be involved in this kind of direct MS-to-MS-communication scenario. Once again, to relate with the solution of Figure 2 above, one can say that also in the solution of Figure 4 there are two communication layers, an overlaid layer where the mobile-stations communicate via an access point and an MS-to-MS layer where the mobile stations communicate directly with each other. Similar to the solution of Figure 2, the air-interface technology used when a mobile station communicates with an access point and the air-interface technology used when the mobile station directly communicates with another mobile station could be the same or different.

### Problems with the existing solutions

There are several handover-related problems with the solution described in Figure 2.
It may be difficult or at least costly to deploy the under-laid layer such that it can provide continuous coverage over the entire area to be covered by the cellular system. Actually, this is one of the reasons to deploy two layers, i.e. it is then sufficient if only the over-laid layer provides full coverage over the entire area to be covered by the cellular system. If the under-laid layer does not provide continuous coverage, a handover to an access point of the over-laid layer is needed when the mobile station leaves the coverage of the under-laid layer. Each such handover implies a risk for a loss of connection. Even if the connection is not completely lost, the handover may lead to a short or longer break in the communication between the mobile station and the network, which may have a negative effect on the service quality.
For a high-speed-moving mobile station connected to the under-laid layer there will be frequent handovers within the under-laid layer. This implies an increased risk for loss of connection, even if the under-laid layer provides full coverage. A typical solution to this problem is to keep all mobile stations moving at high speed within the over-laid layer all the time. However, this implies that high data rates, which are only supported within the under-laid layer, cannot be provided for a fast-moving mobile station.
Finally, in some cases, the technology used for the under-laid layer may not even support handover.

Another, non-handover-related, problem with the solution of Figure 2 is that the under-laid layer must provide for communication in both directions (to and from a mobile station), despite the fact that, in some cases, the capacity and data rate requirements are such that communication using the over-laid layer would be sufficient in one of the communication directions. One example is when the only reason to use the under-laid layer is to support very high data rates in the uplink (from-the-MS) direction with limited mobile-station transmission power. Having to support two-way communication in the under-laid layer may then lead to unnecessarily expensive equipment in the under-laid layer. In some cases, it may not even be possible to transmit in both directions using the under-laid layer, e.g. due to spectrum restrictions.

The solution of Figure 3 suffers from several similar problems as the solution of Figure 2 such as:
- It may be difficult or at least costly to deploy relays for continuous coverage over the entire area to be covered by the cellular system. When a mobile station moves out of relay coverage, a handover to the access point, i.e. the over-laid layer, is needed. Each such handover implies a risk for a loss of the connection.
- The relay must provide for communication in two directions (to and from the mobile terminal). This may lead to unnecessarily expensive relays.

The solution of Figure 4 also suffers from similar handover problems as the solutions of Figures 2 and 3. More specifically, as the mobile stations communicating directly with each other move away from each other, the connection between them must be "handed over" to the access point, i.e. to the over-laid layer, with a risk of loss-of-connection as a consequence.

Therefore there is a desire of an improved solution, compared to the solutions described in Figures 2, 3, and 4, in order to avoid the different problems discussed above.

### SUMMARY OF THE INVENTION

A wireless linking in a cellular communication system and a method for wireless linking is disclosed such that a mobile station is maintained in simultaneous communication with at least a first node and a second node for access to the cellular communication system. Information then going to and from the first node is not identical to the information going to and from the second node. In one embodiment, the first node is an access point in an over-laid layer and the second node is an access point in an under-laid layer of a hierarchical cell structure. In a second embodiment the first node is an access point and the second node is a relay node forwarding received information to and/or from the first node. In a third embodiment the first node is an access point and the second node is another mobile station. In another embodiment a first wireless link to the first node is for control information only. In still another embodiment a second wireless link to the second node is only for communication of information from the mobile station or only for communication of information to the mobile station.

A wireless linking maintained in a cellular communication system according to the present invention is set forth by the independent claim 1 and further embodiments are defined by the dependent claims 2 to 10. Furthermore a method for maintaining a wireless linking according to the present invention is set forth by the independent claim 11, and further embodiments are defined by the dependent claims 12 to 20.

### SHORT DESCRIPTION OF THE DRAWINGS

The invention, together with further objects and advantages thereof, may best be understood by referring to the following detailed description taken together with the accompanying drawings, in which:
- FIG. 1: illustrates a basic communication scenario in a cellular system;
- FIG. 2: illustrates a cellular system having two cell layers, an overlaid layer and an under-laid layer;
- FIG. 3: illustrates a cellular system with relays forwarding information from a Mobile Station to an Access Point and/or information from an Access Point to a Mobile Station;
- FIG. 4: illustrates a cellular system having a connection set up directly between two Mobile Stations;
- FIG. 5: illustrates a solution according to a present application with a mobile station simultaneously communicating with both an Access Point of an over-laid layer and an Access Point of an under-laid layer;
- FIG. 6: illustrates a solution according to the present application with a Mobile Station simultaneously communicating both directly with an Access Point and indirectly with the Access Point via a Relay;
- FIG. 7: illustrates a solution according to the present application with a Mobile Station simultaneously communicating with an Access Point and directly with another Mobile Station.
- Fig. 8: illustrates a solution according the present application where communication in an over-laid layer and communication in an under-laid/relay/MS-to-MS layer share the radio resources by means of sharing in the frequency domain
- Fig.9: illustrates a solution according the present application where communication in an over-laid layer and communication in an under-laid/relay/MS-to-MS layer share the radio resources by means of sharing in the time domain

### DETAILED DESCRIPTION OF THE INVENTION

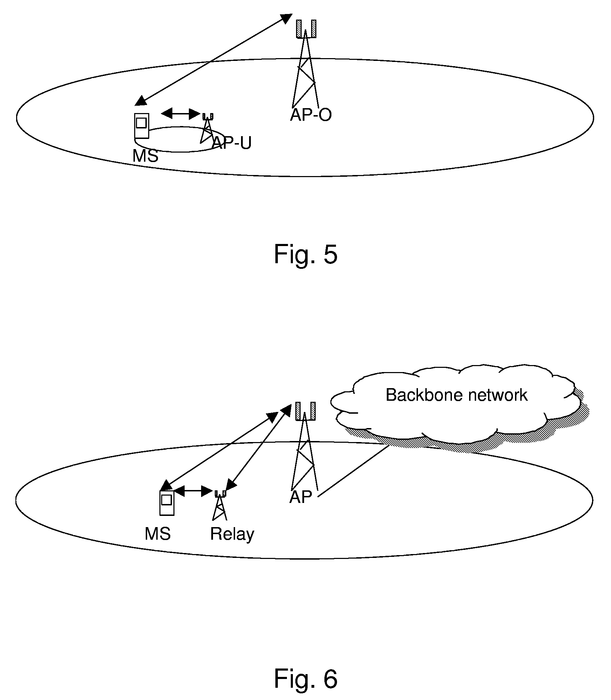

A solution to the problems related to Figure 2 above apparent in the discussion of the background, is to let a mobile station communicate simultaneously with both at least one Node (an access point) of the over-laid system and at least one Node (an access point) of the under-laid system, see Figure 5.

Typically, but not necessarily, communication via the access point of the over-laid layer is limited to low data rates, e.g. control signaling, while high-rate user traffic is communicated via the access point of the under-laid layer. In the general case, any kind of traffic can use the overlaid layer. The benefit of this approach, compared to the approach of Figures 2, where the mobile station communicates via either an access point of the over-laid layer or an access point of the under-laid layer but not simultaneously with access points of both layers, is that, even if the connection in the under-laid layer is lost, the connection between the network and the mobile station is not completely lost. Data communication can continue via the over-laid layer, albeit typically at a lower data rate. Furthermore, control signaling using the radio link in the over-laid layer can rapidly restore the connection in the under-laid layer, without the need for time-consuming access procedures, etc.

In another case, also traffic that requires high quality-of-service, such as speech services, is communicated via the access point of the over-laid layer, while other traffic is simultaneously communicated via the access point of the under-laid layer.

In the third case, communication via the access point of the under-laid layer may only be in one direction, e.g. only in the uplink direction (communication from the mobile station to the access point of the under-laid layer) or only the downlink direction (communication from the access point of the under-laid layer to the mobile station). In this case, all communication, including best-effort packet data communication, in the other direction takes place via the access point of the over-laid layer. Thus the solution presented in Figure 5 avoids the requirement for the access points of the under-laid layer to always support two-way communication (to and from the mobile station).

Similarly, a solution for the problems related to the solution of Figure 3 above, is to let a mobile station communicate simultaneously with both an access point, i.e. a Node in the over-laid layer, and at least relay, i.e. a Node in the relaying layer, see Figures 6. Once again typically, but not necessarily, the communication in the over-laid layer, i.e. directly via the access point, is limited to low data rates, e.g. control signaling, while high-rate user traffic is communicated using the relay layer, i.e. via the relay. Alternative, also trade that requires high quality-of-service is more sensitive, such as speech traffic, is communicated via the over-laid layer, while other traffic is simultaneously communicated via the relay layer. Furthermore, the relay layer may only allow for communication in one direction, e.g. only the uplink direction (communication of information from the mobile station to the relay) or only the downlink direction (communication of information from the relay to the mobile station).

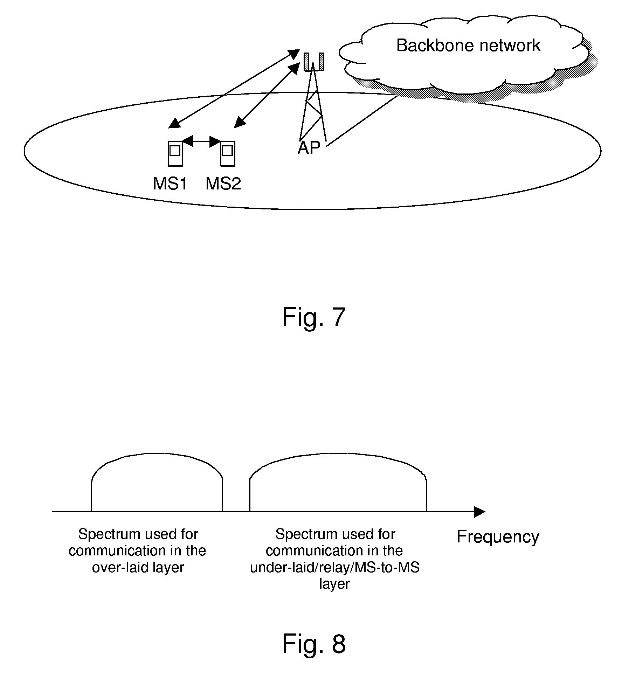

Similarly, a solution for the problems related to the solution of Figure 4 above, is to let a mobile station communicate simultaneously with an access point, i.e. a Node in the over-laid layer and with another mobile station, see Figures 7. Once again typically, but not necessarily, the communication in the over-laid layer, i.e. via the access point, is limited to low data rates, e.g. control signaling, while high-rate user traffic is communicated using directly between the mobile stations. Alternatively, also traffic that requires higher quality-of-service is communicated via the over-laid layer, i.e. via the access point, while other traffic is simultaneously communicated directly between the mobile stations.

Note that, when setting up a communication scenario such as the one of Figures 5, 6, and 7, a connection is first set up in the over-laid layer. When this is done and the capacity or data rate requirements so require or for other reasons, a second communication link is set up in the under-laid/relay/MS-to-MS layer, by means of signaling using the over-laid layer.

Although the solutions shown in Figures 5, 6, and 7 illustrate a mobile station with communication links with a single Node in the under-laid/relay/MS-to-MS layer and a single Node in the over-laid layer, in a general case the mobile station may communicate with more than one Node in each layer.

Also note that, similar to the known solutions of Figure 2, 3, and 4, also with the proposed solutions of Figure 5, 6, and 7 the air interface technology of the over-laid layer and the air-interfaced technology of the under-laid/relay/MS-to-MS layer may be the same or different. Similarly, the same, neighbor, or completely different spectrum may be used for the over-laid layer and the under-laid/relay/MS-to-MS layer.

In order for the mobile station to be able to simultaneously receive and/or transmit data from/to a Node in the over-laid layer and from/to a Node in the under-laid/relay/MS-to-MS layer, according to Figure 5, 6, and 7, the radio resources must be shared between the two layers. One solution how to share the radio resources between the two layers is to transmit in different frequency bands in the over-laid layer and the under-laid/relay/MS-to-MS layer, i.e. sharing in the frequency domain, see Figure 8. Note that, as also explicitly shown in Figure 8, the amount of spectrum used for communication in the two layers may not be the same.

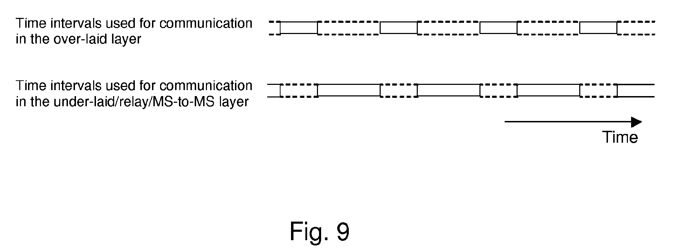

A second solution how to share the radio resources between the two layers is to transmit in different non-overlapping time intervals in the over-laid layer and the under-laid/relay/MS-to-MS layer, i.e. sharing in the time domain, see Figure 9. Note that, as also explicitly shown in figure 9, the amount of time used for communication in the two layers may not be the same.

It will be understood by those skilled in the art that various modifications and changes could be made to the present invention without departure from the spirit and scope thereof, which is defined by the appended claims.

## Claims

1. A wireless linking in a cellular communication system, **characterized in that**
a Mobile Station is maintained in simultaneous communication with at least a First Node and a Second Node for accessing the cellular communication system, whereby information going to and from the first Node and to and from the second Node is not identical.

2. The system according to claim 1, **characterized in that**
the Second Node is a Relay Node forwarding received information to and from the First Node.

3. The system according to claim 1, **characterized in that**
the Second Node is another Mobile Station performing a Mobile Station to Mobile Station communication (MS-to-MS).

4. The system according to claim 1, **characterized in that**
a first wireless link to the First Node is for control information only.

5. The system according to claim 1, **characterized in that**
a second wireless link to the Second Node is only for communication of information from the Mobile Station.

6. The system according to claim 1, **characterized in that**
a second wireless link from the Second Node is only for communication of information to the Mobile Station.

7. The system according to claim 1, **characterized in that**
different air-interface technologies are used for transmission from the First Node and the Second Node.

8. The system according to claim 1, **characterized in that**
a same air-interface technology is used for transmission from the First Node and the Second Node.

9. The system according to claim 1, **characterized in that**
the communication on the First Node and the Second Node is time multiplexed.

10. The system according to claim 1, **characterized in that**
the communication to the First Node and Second Nod is frequency multiplexed.

11. A method for wireless linking in a cellular communication system, **characterized by** the step of:
maintaining a Mobile Station in simultaneous communication with at least a First Node and a Second Node for accessing the cellular communication system, whereby information going to and from the first Node and to and from the second Node will not be identical.

12. The method according to claim 11, **characterized by** the further step of:
setting the Second Node to be a Relay Node forwarding received information to and from the First Node.

13. The method according to claim 11, **characterized by** the further step of:
setting the Second Node to be another Mobile Station performing a Mobile Station to Mobile Station communication (MS-to-MS).

14. The method according to claim 11, **characterized by** the further step of:
using a first wireless link to the First Node for control information only.

15. The method according to claim 11, **characterized by** the further step of:
using a second wireless link to the Second Node only for communication of information from the Mobile Station.

16. The method according to claim 11, **characterized by** the further step of:
using a second wireless link from the Second Node only for communication of information to the Mobile Station.

17. The method according to claim 11, **characterized by** the further step of:
using different air-interface technologies for transmission from the First Node and the Second Node.

18. The method according to claim 11, **characterized by** the further step of:
using a same air-interface technology for transmission from the First Node and the Second Node.

19. The method according to claim 11, **characterized by** the further step of:
having the communication on the First Node and the Second Node time multiplexed.

20. The method according to claim 11, **characterized in** the further step of
having the communication to the First Node and Second Node frequency multiplexed.

21. A Mobile Station in a cellular communication system, **characterized in that** it supports a simultaneous communication from an Access Point via a First Node and a Second Node in the cellular communication system, whereby the information being communicated is not identical.

22. The Mobile Station according to claim 21, **characterized in that** a first wireless link to the First Node and a second wireless link to the Second Node are for communication of information to/from the Mobile Station.

23. The Mobile Station according to claim 21, **characterized in that** different air-interface technologies are used for transmission from the first Node and the Second Node.

24. The Mobile Station according to claim 21, **characterized in that** a same air-interface technology is used for transmission from the First Node and the Second Node.

25. The Mobile Station according to claim 21, **characterized in that** the communication on the First Node and the Second Node is time or frequency multiplexed.

26. An Access Point in a cellular communication system **characterized in that** in a communications with a Mobile Station the Access Point supports communication via at least a First Node and a Second Node for access of a Mobile Station to the cellular system, whereby the information being communicated is not identical.

27. The Access Point according to claim 26, **characterized in that** a first wireless link to the First Node and a second wireless link to the Second Node are for communication of information to/from the Mobile Station.

28. The Access Point according to claim 26, **characterized in that** that different air-interface technologies are used for transmission from the first Node and the Second Node

29. The Access Point according to claim 26, **characterized in that** that a same air-interface technology is used for transmission from the First Node and the Second Node.

30. The Access Point according to claim 26, **characterized in that** that the communication on the First Node and the Second Node is time or frequency multiplexed.
